# FASCICULE DE BREVET EUROPEEN

(11) **EP 0 681 952 B1**
(45) Date de publication et mention de la délivrance du brevet: **11.02.1998**
(21) Numéro de dépôt: 95106544.0
(22) Date de dépôt: 29.04.1995
(51) Int. Cl.: B60R 25/10, E05F 15/00, G08B 13/04

(54) **Dispositif détecteur de situation vitre fermée ou vitre ouverte ou brisée pour véhicule automobile et son procédé d'exploitation, système d'alarme et système lève-vitres électrique pour véhicule comportant un tel dispositif**
Detektorvorrichtung für die Öffnungs- oder Schliessstellung oder für die Zerstörung eines Fensters in einem Kraftfahrzeug und Verfahren zu ihrem Betrieb; Alarmsystem und elektrischer Fensterheber für ein Kraftfahrzeug mit einer derartigen Vorrichtung
Device for detecting a closed/open/broken window condition in a motor vehicle and the method for operating it; Alarmsystem and electric window system for a vehicle having one such device

(30) Priorité: 10.05.1994 FR 9405882
(43) Date de publication de la demande: 15.11.1995
(73) Titulaire: VALEO ELECTRONIQUE, 94000 Creteil (FR)
(72) Inventeur: Bourbin, Yannic, F-92290 Chatenay Malabry (FR); Boucheron, Jean-Louis, F-77176 Savigny le Temple (FR)
(74) Mandataire: Gamonal, Didier

(56) Documents cités:
- WO-A-83/02840
- DE-A- 3 930 735
- DE-A- 4 008 014
- FR-A- 2 685 503
- PATENT ABSTRACTS OF JAPAN vol. 10, no. 353 (M-539) (2409) 28 Novembre 1986 & JP-A-61 150 852 (SUMITOMO ELECTRIC IND LTD) 9 Juillet 1986

## Description

La présente invention concerne un dispositif détecteur de situation vitre fermée ou vitre ouverte ou brisée pour véhicule automobile et son procédé d'exploitation. Elle concerne aussi un système d'alarme ainsi qu'un système lève-vitres électrique pour véhicule comportant un tel dispositif.

Le principe des détecteurs d'effraction utilisés dans les systèmes d'alarme de l'état de la technique, consiste à surveiller le volume intérieur de l'habitacle du véhicule par émission d'une onde, par exemple une onde acoustique, et à analyser l'onde réfléchie qui est reçue.

Toute modification de la forme de l'onde reçue ou de l'état stationnaire établit à l'intérieur de l'habitacle, qui peut être due par exemple à un choc sur la carrosserie du véhicule, ou à une effraction par bris d'une vitre, est détectée et est utilisée pour en déduire une situation d'alarme.

Ces dispositifs souffrent d'un manque de fiabilité, dû notamment à des déclenchements intempestifs, c'est-à-dire en l'absence de situation d'alarme réelle. Or, on constate que la majorité des effractions commises dans la pratique consiste à briser une vitre du véhicule, par exemple une vitre latérale, le pare-brise ou la lunette arrière, afin de dérober le véhicule ou les objets qui se trouvent à l'intérieur de celui-ci.

Il suffirait donc de pouvoir détecter le bris d'une vitre de façon certaine et avec une bonne fiabilité exempte d'erreur pour déclencher une alarme.

Par ailleurs dans les systèmes lève-vitres électriques de l'état de la technique se pose le problème de savoir détecter l'arrivée de la vitre en situation ou position de butée haute, lors de la remontée de celle-ci. On utilise classiquement un dispositif de détection de l'augmentation du couple du moteur électrique d'entraînement de la vitre, par exemple par détection d'une augmentation du courant moteur, pour détecter le fait que la vitre arrive en butée dans la feuillure supérieure de la portière.

Lorsque le système lève-vitres comporte de plus un dispositif antipincement, une telle méthode peut aussi servir à la détection d'une situation de pincement, en combinaison avec la connaissance de la position relative de la vitre dans la portière.

Cette dernière considération a conduit à utiliser des capteurs du type d'un capteur incrémental destiné à fournir une information sur la position instantanée de la vitre. Cependant, la mise en oeuvre d'un tel capteur augmente considérablement la complexité et le coût du système lève-vitres électrique.

C'est pourquoi on a aussi proposé de disposer des contacts de fermeture dans la feuillure supérieure de la portière afin de disposer d'une information "vitre fermée" utilisée en combinaison avec une information "augmentation du couple moteur" pour permettre de distinguer une augmentation du couple moteur due à l'arrivée de la vitre en butée haute d'une information "augmentation du couple moteur" due au pincement d'un objet lors de la remontée de la vitre.

De tels contacts de fermeture, qui sont classiquement de type mécanique ou électromécanique, sont cependant difficiles à mettre en oeuvre dans ce type d'application et ne présentent pas une longévité suffisante.

Afin de porter remède aux inconvénients de l'état de la technique précités, la présente invention propose un dispositif optique permettant de disposer d'une information sur la situation fermée, ouverte ou brisée de la vitre.

En effet la présente invention propose un dispositif détecteur de situation vitre ouverte, vitre fermée ou vitre brisée pour vitres de véhicule automobile. Le dispositif selon l'invention se caractérise en ce qu'il comporte :
- au moins un moyen d'émission d'un faisceau lumineux, tel qu'une diode électroluminescente excitée par un signal d'excitation, permettant d'injecter, soit directement soit indirectement, un faisceau lumineux dans une vitre, dans une direction sensiblement parallèle à la surface de ladite vitre ;
- au moins un moyen de réception d'un faisceau lumineux, tel qu'une photodiode disposée latéralement, produisant un signal de réception ;
- au moins un moyen de capture du faisceau lumineux circulant dans la vitre, tel qu'un prisme, qui est solidaire de la vitre, et qui est adapté pour orienter tout ou partie dudit faisceau vers la photodiode lorsque la vitre se trouve dans une situation déterminée ;
- un circuit électronique d'exploitation permettant de produire ledit signal d'excitation pour exciter ledit moyen d'émission d'un faisceau lumineux, et d'analyser ledit signal de réception pour en déduire une information sur la situation fermée, ouverte ou brisée de la vitre.

Selon un autre aspect de l'invention, le faisceau lumineux est émis indirectement dans la vitre, par l'intermédiaire d'un moyen d'injection tel qu'un prisme disposé entre la diode électroluminescente et la vitre.

Selon un autre aspect de l'invention, le signal d'émission est un signal en créneaux, tel qu'une suite d'impulsions, de sorte que le faisceau lumineux soit émis de façon impulsionnelle.

Selon un autre aspect de l'invention, le moyen de capture du faisceau lumineux est constitué par une entaille inclinée sur le bord inférieur de la vitre, dont l'angle est adapté pour orienter le faisceau lumineux circulant dans la vitre vers la surface sensible de la photodiode.

Selon un autre aspect de l'invention, le moyen de capture du faisceau lumineux est constitué par une pièce rapportée en matériau translucide, et possédant, d'un premier côté, une forme en U destinée à venir s'emboîter sur le bord inférieur de la vitre, et, de l'autre côté, une forme biseautée dont l'angle est adapté pour dévier le faisceau lumineux circulant dans la vitre vers la surface sensible de la photodiode.

Selon un autre aspect de l'invention, le moyen de capture du faisceau lumineux est constitué par une pièce rapportée en matériau translucide, possédant, d'un premier côté, une forme plane qui est destinée au collage de ladite pièce sur le bord inférieur de la vitre à l'aide d'une colle translucide, et, d'un autre côté, une forme biseautée dont l'angle est adapté pour dévier une partie du faisceau lumineux circulant dans la vitre vers la surface sensible de la photodiode.

Selon un autre aspect de l'invention le moyen de capture du faisceau lumineux est constitué par une pièce rapportée en matériau translucide, possédant, d'un premier côté, une forme plane qui est destinée au collage de ladite pièce sur le bord inférieur de la vitre à l'aide d'une colle translucide, et, d'un autre côté, une forme de lentille convergente adaptée pour concentrer une partie du faisceau lumineux circulant dans la vitre et pour le diriger vers la surface sensible de la photodiode.

Selon un autre aspect de l'invention, le faisceau lumineux émis par la diode électroluminescente est un rayonnement infrarouge.

Selon un autre aspect de l'invention, le dispositif détécteur est exploité selon un procédé d'exploitation consistant à :
- produire un signal d'excitation tel qu'une suite d'impulsions aux bornes de la diode électroluminescente;
- produire un signal de réception en fonction de l'intensité lumineuse reçue par la photodiode ;
- comparer le signal d'excitation avec le signal de réception dans une opération ET logique sur ces deux signaux;
- intégrer le résultat de cette opération ET logique afin d'obtenir un signal continu d'amplitude caractéristique du résultat de l'opération ET logique et :
   - si le résultat de cette opération ET logique est un 1 logique, déduire une situation de vitre fermée ;
   - si le résultat de cette opération ET logique est un 0 logique, déduire une situation de vitre ouverte ou vitre brisée.

L'invention concerne aussi un système d'alarme pour véhicule automobile mettant en oeuvre au moins un dispositif détecteur de situation vitre ouverte, vitre fermée ou vitre brisée tel que ci-dessus.

Selon une caractéristique de l'invention le système d'alarme met en oeuvre un dispositif détecteur de situation vitre ouverte, vitre fermée ou vitre brisée pour chacune des n vitres surveillées, ouvrantes ou non, le signal d'excitation étant le même signal apliqué simultanément à chacune des n diodes électroluminescentes, et étant compare avec les n signaux de réception issus respectivement des n photodiodes, dans une opération ET logique réalisée par un circuit ET logique comportant n+1 entrées.

L'invention concerne aussi un système lève-vitres électrique pour véhicule automobile mettant en oeuvre un tel dispositif détecteur de situation vitre ouverte, vitre fermée ou vitre brisée.

Ce dispositif est alors particulièrement destiné à fournir une information vitre fermée utilisable par le système lors de la remontée de la vitre pour détecter l'arrivée de celle-ci en butée haute.

D'autres caractéristiques et avantages de la présente invention seront mieux compris à l'aide de la description qui va suivre en référence aux dessins annexés qui sont :
- la figure 1 : une coupe partielle d'un panneau de portière selon l'invention ;
- la figure 2 : quatre modes de réalisation possibles du moyen de capture du faisceau lumineux selon l'invention ;
- la figure 3 : un schéma d'un circuit électronique d'exploitation selon l'invention pour une vitre de portière ;
- la figure 4 : un chronogramme des signaux électriques du circuit électronique d'exploitation de la figure 2 en situation vitre fermée, et en situation vitre ouverte ou vitre brisée ;
- la figure 5 : un schéma d'un circuit électronique d'exploitation selon l'invention pour les vitres des quatre portières d'un véhicule.

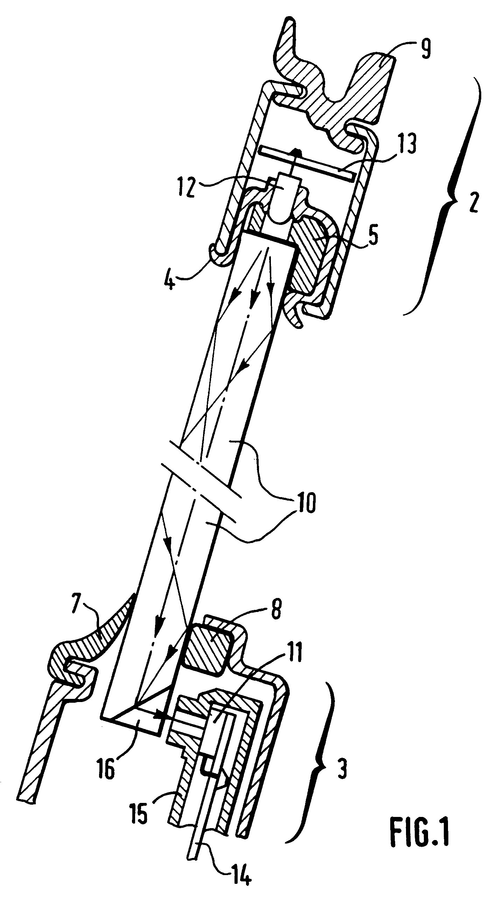

A la figure 1, on a représenté une vue partielle en coupe d'un panneau de portière selon l'invention sur laquelle une vitre 10 est représentée en position de butée haute, c'est-à-dire logée dans la feuillure supérieure 2 de la portière.

Pour actionner l'ouverture de la vitre, un moyen d'entraînement tel qu'un moteur électrique (non représenté) permet de faire coulisser la vitre 10 dans la partie inférieure 3 du panneau de portière.

L'étanchéité au passage de la vitre avec l'intérieur de la portière est réalisée, dans la feuillure supérieure par un joint de caoutchouc 4 et un feutre 5 destiné à absorber le serrage de la vitre, et dans la partie inférieure 3 du panneau de portière, par un joint de caoutchouc 7 et un feutre 8.

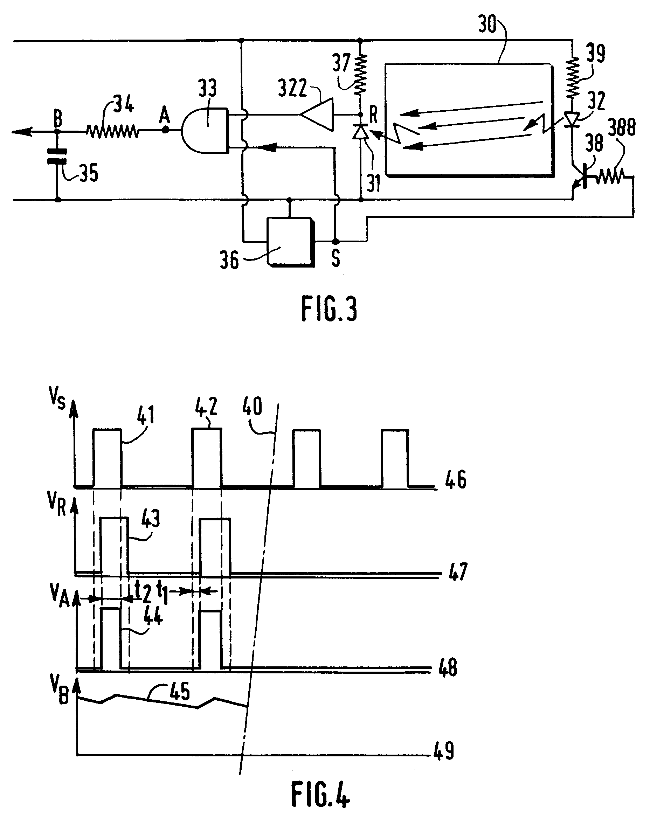

Un joint de caoutchouc 9 assure de, plus l'étanchéité au contact de la portière avec le montant supérieur du châssis du véhicule (non représenté). Dans la feuillure supérieure 2 on a disposé un support, tel qu'un circuit imprimé 13, pour une diode électroluminescente 12. Ce circuit imprimé 13 comporte les moyens de raccordement de la diode 12 à un circuit électronique d'exploitation qui sera décrit plus loin en regard de la figure 3.

Le joint de caoutchouc 4 comporte un moyen de passage et de maintien, tel qu'un trou, dans lequel est positionnée la diode 12. De même le feutre 5 comporte un trou afin de laisser passer le faisceau lumineux qui est émis par la diode 12.

Lorsque la vitre 10 est en position de butée haute dans la feuillure supérieure 2 de la portière, le faisceau lumineux émis par la diode électroluminescente 12 est transmis au moins en partie dans la vitre 10.

Dans un mode de réalisation préféré, l'axe optique de la diode électroluminescente 12 est confondu avec l'axe longitudinal de la vitre 10 de sorte que la diode électroluminescente 12 éclaire la vitre 10 sur sa tranche.

Dans d'autres modes de réalisation possibles de l'invention, l'axe de la diode électroluminescente 12 peut être orienté par rapport à l'axe longitudinal de la vitre, un moyen de déviation du faisceau lumineux émis, tel qu'un prisme, permettant de dévier ledit faisceau lumineux afin qu'il attaque la vitre 10 sur sa tranche.

Le faisceau lumineux émis circule dans la vitre 10 et est collecté au moins en partie, et est orienté vers une photodiode 11 disposée dans la partie inférieure 3 de la portière.

Un moyen de capture du faisceau lumineux, tel qu'un prisme 16, permet d'orienter au moins une partie du flux lumineux circulant dans la vitre 10 vers la photodiode 11.

Dans un mode de réalisation préféré, représenté à la figure 1, la photodiode 11 est disposée perpendiculairement à la vitre 10, le moyen de capture du flux lumineux 16 étant constitué par un prisme d'un angle égal à 45° La photodiode 11 est montée sur un support, tel qu'un circuit imprimé 14, qui comporte de plus des moyens de raccordement au circuit électronique d'exploitation qui sera décrit plus loin en regard de la figure 3.

Le moyen de capture 16 du flux lumineux est disposé relativement à la photodiode 11 de telle façon qu'un flux lumineux n'est mesuré par la photodiode 11 que lorsque la vitre 10 est en position de butée haute dans la feuillure supérieure 2.

En effet même lorsque la vitre est partiellement baissée, une partie du faisceau lumineux émis par la diode électroluminescente 12 peut se propager à l'intérieur de la vitre 10.

Or comme on l'aura compris le principe de l'invention consiste à déduire une information "vitre fermée" lorsqu'un courant électrique circule à l'intérieur d'une boucle électrique incluant la diode électroluminescente 12 et la photodiode 11. Lorsque la vitre 10 est abaissée la boucle électrique ainsi constituée est ouverte du fait de la rupture du chemin lumineux établi entre la diode 12 et la photodiode 11 à travers la vitre 10.

En effet même si un flux lumineux continue de circuler dans la vitre du fait que la diode électroluminescente 12 continue d'éclairer la tranche de la vitre 10 à travers une couche d'air, aucun faisceau lumineux n'est mesuré par la photodiode 11, le moyen de capture 16 du faisceau lumineux n'étant plus en regard de ladite photodiode 11.

Dans un système lève-vitres électrique, dans lequel la fermeture des vitres peut être automatique, le dispositif détecteur de situation de la vitre peut être utilisé pour acquérir l'information "vitre fermée".

Dans un système d'alarme, mis en situation de veille lorsque l'utilisateur a quitté le véhicule après avoir fermé l'ensemble des vitres et verrouillé son véhicule, le dispositif détecteur de situation de l'invention peut être utilisé pour déduire une information "vitre brisée".

L'invention ne se limite pas à la protection des vitres latérales et/ou amovibles du véhicule, mais elle s'applique aussi au pare-brise, à la lunette arrière, ou à tout autre vitre du véhicule.

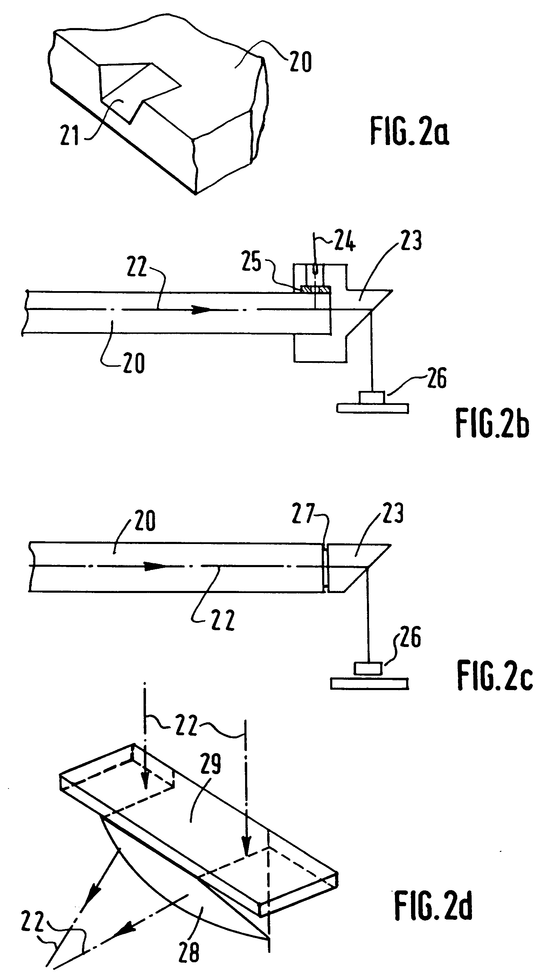

A la figure 2a, on a représenté un premier mode de réalisation du moyen de capture du faisceau lumineux selon l'invention. Ce mode de réalisation correspond à celui qui est visible sur la figure 1. Une partie de la vitre 20 est représentée sur la figure 2a, cette partie correspondant au bas de la vitre. Le moyen de capture du faisceau lumineux est ici réduit à une entaille biseautée 21 formant un prisme. De l'angle de ce prisme 21 dépend l'angle de sortie du flux lumineux de la vitre. Cet angle est bien sûr adapté à la disposition de la photodiode.

A la figure 1 la photodiode 11 est disposée orthogonalement à la vitre 10, le prisme 16 étant un prisme à 45° permettant de dévier le flux lumineux d'un angle de 90°.

D'autres modes de réalisation sont possibles dans lesquels la photodiode peut être disposée différemment, l'angle du prisme 16,21 étant adapté à cette disposition.

La réalisation d'un angle biseauté 21 sur la vitre 20 peut éventuellement être évitée par l'utilisation d'autres moyens de capture du faisceau lumineux, tel que celui représenté à la figure 2b.

Sur cette figure le moyen de capture du faisceau lumineux est constitué par une pièce 23 réalisée dans un matériau plastique conducteur de la lumière, par exemple du polymétacrylate.

Cette pièce rapportée 23, représentée en coupe sur la figure, possède une forme en U sur un premier côté destinée à venir s'emboîter sur le bord de la vitre 20, et une forme biseautée sur une seconde moitié destinée à dévier le flux lumineux 22 qui circule à l'intérieur de la vitre 20. L'angle du biseau est adapté pour dévier le flux lumineux 22 vers une photodiode 26.

Sur l'un des bords de la partie de la pièce rapportée 23 qui présente une forme de U est ménagé un trou taraudé pour recevoir une vis pointeau 24 destinée à assurer la fixation de la pièce rapportée 23 sur la vitre 20. Cette vis pointeau 24 vient appuyer sur une cale élastique 25 contre le bord de la vitre 20.

Un autre mode de réalisation possible de la pièce rapportée 23 est représenté à la figure 2c.

Dans ce mode de réalisation la pièce rapportée 23 est collée sur la tranche inférieure de la vitre 20 à l'aide d'une colle spéciale translucide 27.

De même que dans le mode de réalisation précédent, la pièce rapportée 23 comporte une partie de forme forme biseautée destinée à dévier le flux lumineux 22 vers la photodiode 26 en sortie de la vitre 20.

A la figure 2d, on a représenté un quatrième mode de réalisation possible de la pièce rapportée 23. Dans ce mode de réalisation la pièce rapportée 23 comporte une face plane relativement large 29 qui peut être appliquée et collée sur la tranche inférieure de la vitre 20 de la même façon que dans le mode de réalisation décrit à la figure 2c. Elle comporte de plus une seconde face en forme de lentille convergente 28.

Ainsi une pluralité de rayons lumineux 22 de directions sensiblement parallèles, et parallèles à l'axe longitudinal de la vitre 20, sont collectés du côté de la première face 29 au sortir de la vitre 20, et ressortent du côté de la seconde face 28 en forme d'un faisceau convergent qui est de plus orienté vers la photodiode (non représentée).

A la figure 3, on a représenté un schéma d'un circuit électronique d'exploitation du dispositif détecteur de l'invention. Un oscillateur 36 génère un signal en créneau, sous forme d'une suite d'impulsions, qui est envoyé, d'une part, sur la base d'un transistor 38 par l'intermédiaire d'une résistance de base 388, et, d'autre part, sur une première entrée d'un circuit logique 33 réalisant la fonction ET logique.

Dans le chemin du collecteur du transistor 38, on trouve une résistance 39 connectée, d'une part, à la borne d'alimentation positive du circuit, et, d'autre part, à l'anode d'une diode électroluminescente 32 dont la cathode est connectée au collecteur du transistor 38.

Ainsi, lorsqu'une impulsion de courant est présente sur la base du transistor 38, celle-ci devient passante et un courant circule dans la diode électroluminescente 32 faisant émettre par celle-ci un faisceau lumineux qui est transmis dans la vitre 30. Ce faisceau lumineux est au moins en partie collecté par une photodiode 31, dont l'anode est reliée à la masse électrique du circuit, et dont la cathode est reliée à la borne d'alimentation positive du circuit par l'intermédiaire d'une résistance 37. La tension présente au borne de la photodiode 31 a la forme d'un signal en créneau qui est une image du signal en créneau délivré par l'oscillateur 36 et appliqué à la base du transistor 38. Cette tension est amplifiée par un amplificateur 32 qui est appliquée à une seconde entrée du circuit ET logique 33.

Le traitement de l'information fournie par la photodiode 31 consiste ainsi à opérer une opération ET logique entre le signal reçu par la photodiode 31 et le signal émis par la diode électroluminescente 32. En effet à des considérations de retard près, qui peuvent être dues par exemple au temps de commutation du transistor 38, au temps de propagation de l'onde lumineuse dans la vitre 30 et au retard introduit par l'amplificateur 32, on peut dire que la vitre est en position fermée si le signal émis se retrouve en même temps sur les deux entrées du circuit ET logique 33, et que la vitre est soit ouverte soit brisée si tel n'est pas le cas. En sortie du circuit logique 33 est disposée une cellule intégratrice qui est constituée d'une résistance 34 connectée en série sur la sortie dudit circuit ET logique 33 et d'un condensateur 35 mis en parallèle entre ladite sortie et la masse électrique du circuit.

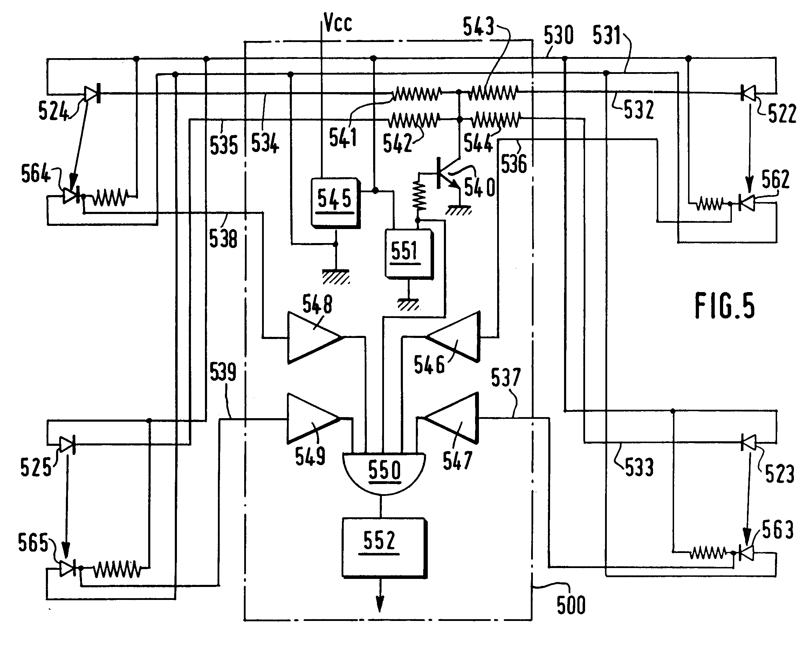

A la figure 4 on a représenté des chronogrammes de signaux présents dans le circuit de la figure 3. Sur la partie gauche de la figure 4, on a représenté ces signaux dans une situation "vitre fermée". Sur la partie droite de cette figure, on a représenté les mêmes signaux dans une situation vitre ouverte ou vitre brisée. Les deux parties de la figure sont séparées sur celle-ci par une ligne brisée 40.

Le premier chronogramme 46 représente le signal en sortie de l'oscillateur 36 noté S sur le schéma de la figure 3 et qui est donc le signal V_{S} émis dans la vitre 30. Le second chronogramme 47 représente le signal V_{R} reçu par la photodiode 31, c'est-à-dire la tension aux bornes de la cathode de la diode 31. Le troisième chronogramme 48 représente le signal V_{A} présent à la sortie du circuit ET logique 33 référencé A sur la figure 3. Enfin, le quatrième chronogramme 49 représente le signal V_{B} présent au point B du circuit de la figure 3 c'est-à-dire en sortie de la cellule intégratrice 34,35.

Dans le cas d'une situation vitre fermée (parti gauche de la figure 4), on voit que le signal reçu V_{R} a la même forme que le signal émis V_{S.} Ces signaux se présentent sous la forme d'un train d'impulsions 41,42.

Compte tenu du fait que la largeur d'une impulsion émise et donc d'une impulsion reçue est supérieure à l'écart temporel T1 entre l'instant d'émission d'une impulsion 41 et l'instant de réception de l'impulsion correspondante 43, il existe un temps T2 pendant lequel les deux entrées du circuit ET logique 33 sont à l'état logique 1. Pendant cet intervalle de temps T2 la sortie du circuit ET logique 33 est donc à l'état logique 1. Le signal V_{A} représenté sur le troisième chronogramme 48 de la figure 4 présente une impulsion correspondante 44.

En sortie de la cellule intégratrice 34,35, le signal V_{B} représenté sur la figure 4 par le quatrième chronogramme 49 présente une valeur qui, en première approximation, est assimilable à un signal continu 45 correspondant à la tension d'un niveau logique 1.

Dans le cas d'une situation vitre ouverte ou vitre brisée (partie droite de la figure, à droite de la ligne brisée 40), on voit au contraire que le signal reçu V_{R} ne comporte pas d'impulsions correspondant aux impulsions 41b, 42b émises.

Le signal reçu V_{R} est plat, puisque la boucle électro-optique incluant la diode électroluminescente 32 et la photodiode 31 est ouverte entre ces deux composants.

De ce fait, le signal V_{A} en sortie du circuit ET logique 33 est aussi un signal plat représenté sur le chronogramme 47.

De plus, la valeur de la tension continue au point B de la figure 3 est nulle. En effet, le signal V_{B} présent en sortie de la cellule intégratrice 34,35 est un signal nul représenté par le quatrième chronogramme 49.

L'exploitation du dispositif détecteur selon l'invention est faite en mode impulsionnel afin de réduire la durée d'émission de la diode électroluminescente 32 et ce dans le but de réduire la consommation électrique du dispositif. Le schéma électronique présente à la figure 3, décrit de façon relativement simple, les éléments nécessaires au fonctionnement du dispositif selon l'invention. Des variantes de réalisation de ce schéma sont bien sûr possibles.

A la figure 5, on a représenté un schéma d'un circuit électronique d'exploitation de l'invention pour les quatre vitres des quatre portières d'un véhicule. Ce mode d'exploitation n'est aucunement limitatif puisque l'invention peut parfaitement s'appliquer à un nombre supérieur de vitres et notamment peut s'appliquer à l'ensemble des vitres du véhicule, y compris au pare-brise et à la lunette arrière.

Sur la figure 5, d'une part, on a isolé les quatre paires constituées d'une diode électroluminescente 522,523,524 ou 525 et, d'autre part, d'une photodiode 562,563,564 ou 565. Les composants électroniques d'exploitation proprement dits constituent un module d'exploitation 500 qui, dans un mode de réalisation possible de l'invention, est une partie d'un organe fonctionnel du véhicule.

Le schéma présenté à la figure 5 s'applique préférentiellement à un système d'alarme de véhicule intégrant le dispositif détecteur de situation vitre brisée selon l'invention.

La liaison entre le module électronique d'exploitation 500 et le dispositif émetteur/récepteur constitué par une paire de diodes émettrices et réceptrices, est réalisée pour chaque portière par l'intermédiaire de quatre fils. Cette liaison comporte :
- un fil d'alimentation 530 ;
- un fil de masse 531 ;
- un fil de commande de la diode électroluminescente respectivement 532,533,534 et 535 ;
- un fil de lecture du signal présent sur la photodiode respectivement 536,537,538 et 539.

Dans le cadre d'une application à un système d'alarme, il est particulièrement avantageux de regrouper la commande des quatre diodes émettrices 532,533,534,535 dans le module électronique d'exploitation 500 afin de n'utiliser qu'un seul transistor 540 dont le collecteur est connecté aux quatre diodes émettrices par l'intermédiaire de quatre résistances respectivement 541,542,543 et 544.

Les signaux de mesure issus des diodes réceptrices sont appliqués par l'intermédiaire des fils respectivement 536,537,538 et 539 à des amplificateurs respectivement 546,547,548 et 549.

La sortie de chacun de ces amplificateurs est connectée à une entrée correspondante d'un circuit ET logique 550 comportant cinq entrées.

Le module électronique d'exploitation 500 est relié à la tension de la batterie Vbat et comporte un circuit régulateur 545 fournissant une tension stabilisée Vcc à un oscillateur 551 qui permet de générer un signal, sous forme d'un train d'impulsions, qui est appliqué sur la base du transistor 540. Ce même signal est aussi appliqué sur une cinquième entrée du circuit ET logique 550.

La sortie du circuit ET logique 550 est reliée à une cellule intégratrice 552 identique à la cellule intégratrice 34,35 de la figure 3, et qui remplit le même rôle.

Le signal continu produit en sortie de la cellule intégratrice 552 est utilisable par tout système, mettant en oeuvre le dispositif de détection de l'invention, notamment un système d'alarme ou un système lève-vitres électriques pour véhicule automobile.

## Revendications

1. Dispositif détecteur de situation vitre ouverte, vitre fermée ou vitre brisée pour véhicule automobile, caractérisé en ce qu'il comporte :
- au moins un moyen d'émission d'un faisceau lumineux, tel qu'une diode électroluminescente (12,32) excitée par un signal d'excitation (46), permettant d'injecter, soit directement soit indirectement, un faisceau lumineux dans une vitre (10,20,30), dans une direction sensiblement parallèle à la surface de ladite vitre ;
- au moins un moyen de réception d'un faisceau lumineux, tel qu'une photodiode (11,26,31) disposée latéralement, produisant un signal de réception (47) ;
- au moins un moyen (16,21,23) de capture du faisceau lumineux circulant dans la vitre, tel qu'un prisme, qui est solidaire de la vitre, et qui est adapté pour orienter tout ou partie dudit faisceau vers la photodiode (11,31) lorsque la vitre se trouve dans une situation déterminée ;
- un circuit électronique d'exploitation permettant de produire ledit signal d'excitation (46) pour exciter ledit moyen (12,32) d'émission d'un faisceau lumineux, et d'analyser ledit signal de réception (47) pour en déduire une information sur la situation fermée, ouverte ou brisée de la vitre.

2. Dispositif selon la revendication 1, caractérisé en ce que le faisceau lumineux est émis indirectement dans la vitre (10,20,30), par l'intermédiaire d'un moyen d'injection tel qu'un prisme disposé entre la diode électroluminescente et la vitre.

3. Dispositif selon la revendication 1 ou la revendication 2, caractérisé en ce que le signal d'émission (46) est un signal en créneaux, tel qu'une suite d'impulsions, de sorte que le faisceau lumineux soit émis de façon impulsionnelle.

4. Dispositif selon l'une des revendications 1 à 3, caractérisé en ce que le moyen de capture du faisceau lumineux est constitué par une entaille inclinée (21) sur le bord inférieur de la vitre (20), dont l'angle est adapté pour orienter le faisceau lumineux (22) circulant dans la vitre vers la surface sensible de la photodiode (26).

5. Dispositif selon l'une des revendications 1 à 3, caractérisé en ce que le moyen de capture du faisceau lumineux est constitué par une pièce rapportée (23) en matériau translucide, et possédant, d'un premier côté, une forme en U destinée à venir s'emboîter sur le bord inférieur de la vitre (20), et, de l'autre côté, une forme biseautée dont l'angle est adapté pour dévier le faisceau lumineux (22) circulant dans la vitre (20) vers la surface sensible de la photodiode (26).

6. Dispositif selon la revendication 3, caractérisé en ce que le moyen de capture du faisceau lumineux est constitué par une pièce rapportée en matériau translucide, possédant, d'un premier côté, une forme plane qui est destinée au collage de ladite pièce sur le bord inférieur de la vitre (20) à l'aide d'une colle translucide, et, d'un autre côté, une forme biseautée dont l'angle est adapté pour dévier une partie du faisceau lumineux (22) circulant dans la vitre (20) vers la surface sensible de la photodiode (26).

7. Dispositif selon l'une des revendications 1 à 3, caractérisé en ce que le moyen de capture du faisceau lumineux est constitué par une pièce rapportée en matériau translucide, possédant, d'un premier côté, une forme plane qui est destinée au collage de ladite pièce sur le bord inférieur de la vitre (20) à l'aide d'une colle translucide, et, d'un autre côté, une forme de lentille convergente adaptée pour concentrer une partie du faisceau lumineux (22) circulant dans la vitre (20) et pour le diriger vers la surface sensible de la photodiode (26).

8. Dispositif selon l'une des revendications précédentes, caractérisé en ce que le faisceau lumineux émis par la diode électroluminescente (12,32) est un rayonnement infrarouge.

9. Procédé d'exploitation d'un dispositif détecteur selon l'une quelconque des revendications précédentes, caractérisé en ce qu'il consiste à :
- produire un signal d'excitation (VS) tel qu'une suite d'impulsions (41,42) aux bornes de la diode électroluminescente (32);
- produire un signal de réception (VR) en fonction de l'intensité lumineuse reçue par la photodiode (32) ;
- comparer le signal d'excitation (VS) avec le signal de réception (VR) dans une opération ET logique sur ces deux signaux ;
- intégrer le résultat de cette opération ET logique afin d'obtenir un signal continu d'amplitude caractéristique du résultat de l'opération ET logique et :
- si le résultat de cette opération ET logique est un 1 logique, déduire une situation de vitre fermée ;
- si le résultat de cette opération ET logique est un 0 logique, déduire une situation de vitre ouverte ou vitre brisée.

10. Système d'alarme pour véhicule automobile caractérisé en ce qu'il met en oeuvre au moins un dispositif détecteur de situation vitre ouverte, vitre fermée ou vitre brisée selon l'une quelconque des revendications 1 à 7.

11. Système d'alarme selon la revendication 10, caractérisé en ce qu'il met en oeuvre un dispositif détecteur de situation vitre ouverte, vitre fermée ou vitre brisée pour chacune des n vitres surveillées ouvrantes ou non, le signal d'excitation (VS) étant le même signal apliqué simultanément à chacune des n diodes électroluminescentes (522,523,524,525), et étant comparé avec les n signaux de réception (536,537,538,539) issus respectivement des n photodiodes (562,563,564,565), dans une opération ET logique réalisée par un circuit ET logique (550) comportant n+1 entrées.

12. Système lève-vitres électrique pour véhicule automobile caractérisé en ce qu'il met en oeuvre un dispositif détecteur de situation vitre ouverte, vitre fermée ou vitre brisée selon l'une quelconque des revendications 1 à 8.

## Claims

1. A detecting device for a motor vehicle, for detecting a situation in which a glazed element is open, a glazed element is closed or a glazed element is broken, characterised in that it includes:
- at least one means for emitting a light beam, such as a light emitting diode (12, 32) which is excited by an excitation signal (46), for injecting a light beam, either directly or indirectly, into a glazed element (10, 20, 30) in a direction substantially parallel to the surface of the said glazed element;
- at least one means, such as a photodiode (11, 26, 31) disposed laterally, for receiving a light beam and producing a reception signal (47);
- at least one means (16, 21, 23) for capturing the light beam circulating within the glazed element, such as a prism, which is fixed to the glazed element and which is adapted to orientate all or part of the said beam towards the photodiode (11, 31) when the glazed element is in a specific situation;
- an electronic processing circuit for producing the said excitation signal (46) so as to excite the said means (12, 32) for emitting a light beam, and for analysing the said reception signal (47) whereby to deduce therefrom information as to the closed, open or broken condition of the glazed element.

2. A device according to Claim 1, characterised in that the light beam is emitted indirectly into the glazed element (10, 20, 30) through an injection means, such as a prism, disposed between the light emitting diode and the glazed element.

3. A device according to Claim 1 or Claim 2, characterised in that the emission signal (46) is a pulsed signal, such as a series of pulses, such that the light beam is emitted in pulsed form.

4. A device according to one of Claims 1 to 3, characterised in that the means for capturing the light beam consists of an inclined notch (21) on the lower edge of the glazed element (20), the angle of inclination of which is adapted so as to orientate the light beam (22) circulating in the glazed element towards the sensitive surface of the photodiode (26).

5. A device according to one of Claims 1 to 3, characterised in that the means for capturing the light beam consists of an attached member (23) of translucent material, having, on a first side, a U-shaped form adapted to fit over the lower edge of the glazed element (20), and on the other side a chamfered form, the angle of which is adapted to deflect the light beam (22) circulating in the glazed element (20) towards the sensitive surface of the photodiode (26).

6. A device according to Claim 3, characterised in that the means for capturing the light beam consists of an attached member of translucent material having, on a first side, a flat form which is adapted for the adhesive attachment of the said member on the lower edge of the glazed element (20) by means of a translucent adhesive, and, on another side, a chamfered form the angle of which is adapted to deflect, towards the sensitive surface of the photodiode (26), part of the light beam (22) circulating in the glazed element (20).

7. A device according to one of Claims 1 to 3, characterised in that the means for capturing the light beam consists of an attached component of translucent material, having on a first side, a flat form which is adapted for the adhesive attachment of the said member on the lower edge of the glazed element (20) by means of a translucent adhesive, and, on another side, the form of a convergent lens adapted to concentrate part of the light beam (22) circulating in the glazed element (20) and to direct it towards the sensitive surface of the photodiode (26).

8. A device according to one of the preceding Claims, characterised in that the light beam emitted by the light emitting diode (12, 32) is infrared radiation.

9. A method of operation of a detecting device according to any one of the preceding Claims, characterised in that it consists of:
- producing an excitation signal (VS) such as a series of pulses (41, 42) across the light emitting diode (32);
- producing a reception signal (VR) as a function of the luminous intensity received by the photodiode (32);
- comparing the excitation signal (VS) with the reception signal (VR) in an AND logic operation on the two said signals;
- integrating the result of the said AND logic operation in order to obtain a continuous amplitude signal characteristic of the result of the AND logic operation; and
- if the result of the said AND logic operation is a logic state 1, deducing that the glazed element is closed;
- if the result of the said AND logic operation is a logic state 0, deducing that the glazed element is open or that the glazed element is broken.

10. An alarm system for a motor vehicle, characterised in that it includes at least one device according to any one of Claims 1 to 7, for detecting a situation in which a glazed element is open, closed or broken.

11. An alarm system according to Claim 10, characterised in that it includes a device for detecting that the glazed element is open, closed or broken for each of the n glazed elementes monitored, whether openable or not, the excitation signal (VS) being the same signal applied simultaneously to each of the n light emitting diodes (522, 523, 524, 525), and being compared with the n reception signals (536, 537, 538, 539) given respectively by the n photodiodes (562, 563, 564, 565), in an AND logic operation performed by an AND logic circuit (550) having n + 1 inputs.

12. An electrical window operating system for a motor vehicle, characterised in that it includes a device according to any one of Claims 1 to 8 for detecting a condition in which a glazed element is open, closed or broken.

## Patentansprüche

1. Vorrichtung zur Erfassung der Situation Fenster geöffnet, Fenster geschlossen oder Fenster eingeschlagen für Kraftfahrzeuge , **dadurch gekennzeichnet,** daß sie die folgenden Bestandteile umfaßt:
- mindestens ein Mittel zum Abstrahlen eines Lichtstrahls, etwa eine durch ein Erregungssignal (46) angesteuerte Leuchtdiode (12, 32), das, entweder direkt oder indirekt, die Einstrahlung eines Lichtstrahls in ein Fenster (10, 20, 30) in einer Richtung ermöglicht, die in etwa parallel zur Oberfläche des besagten Fensters verläuft;
- mindestens ein Mittel zum Empfangen eines Lichtstrahls, etwa eine seitlich angeordnete Photodiode (11, 26, 31), das ein Empfangssignal (47) erzeugt;
- mindestens ein Mittel (16, 21, 23) zum Auffangen des im Fenster umlaufenden Lichtstrahls, etwa ein Prisma, das fest mit dem Fenster verbunden und das in der Lage ist, den besagten Lichtstrahl insgesamt oder teilweise zur Photodiode (11, 31) auszurichten, wenn sich das Fenster in einer bestimmten Situation befindet;
- eine elektronische Betriebsschaltung, die es ermöglicht, das besagte Erregungssignal (46) zu erzeugen, um das besagte Mittel (12, 32) zum Abstrahlen eines Lichtstrahls anzusteuern, und das besagte Empfangssignal (47) zu analysieren, um daraus eine Information über den geschlossenen, geöffneten oder eingeschlagenen Zustand des Fensters abzuleiten.

2. Vorrichtung nach Anspruch 1 , **dadurch gekennzeichnet,** daß der Lichtstrahl indirekt in das Fenster (10, 20, 30), über ein Einstrahlmittel, etwa ein Prisma, abgestrahlt wird, das zwischen der Leuchtdiode und dem Fenster angeordnet ist.

3. Vorrichtung nach Anspruch 1 oder Anspruch 2 , **dadurch gekennzeichnet,** daß das Sendesignal (46) ein Sprungsignal ist, etwa eine Impulsfolge, so daß der Lichtstrahl impulsartig abgestrahlt wird.

4. Vorrichtung nach einem der Ansprüche 1 bis 3, **dadurch gekennzeichnet,** daß das Mittel zum Auffangen des Lichtstrahls aus einer geneigten Einkerbung (21) an der Unterkante des Fensters (20) besteht, deren Winkel in der Lage ist, den im Fenster umlaufenden Lichtstrahl (22) zur empfindlichen Fläche der Photodiode (26) auszurichten.

5. Vorrichtung nach einem der Ansprüche 1 bis 3, **dadurch gekennzeichnet,** daß das Mittel zum Auffangen des Lichtstrahls aus einem angefügten Teil (23) aus einem lichtdurchlässigen Werkstoff besteht, das auf einer ersten Seite eine U-Form, die an der Unterkante des Fensters (20) einzupassen ist, und auf der anderen Seite eine abgeschrägte Form besitzt, deren Winkel in der Lage ist, den im Fenster (20) umlaufenden Lichtstrahl (22) zur empfindlichen Fläche der Photodiode (26) abzulenken.

6. Vorrichtung nach Anspruch 3 , **dadurch gekennzeichnet,** daß das Mittel zum Auffangen des Lichtstrahls aus einem angefügten Teil aus einem lichtdurchlässigen Werkstoff besteht, das auf einer ersten Seite eine ebene Form, die zum Aufkleben des besagten Teils an der Unterkante des Fensters (20) mittels eines lichtdurchlässigen Klebstoffs bestimmt ist, und auf einer anderen Seite eine abgeschrägte Form besitzt, deren Winkel in der Lage ist, einen Teil des im Fenster (20) umlaufenden Lichtstrahls zur empfindlichen Fläche der Photodiode (26) abzulenken.

7. Vorrichtung nach einem der Ansprüche 1 bis 3, **dadurch gekennzeichnet,** daß das Mittel zum Auffangen des Lichtstrahls aus einem angegefügten Teil aus einem lichtdurchlässigen Werkstoff besteht, das auf einer ersten Seite eine ebene Form, die zum Aufkleben des besagten Teils an der Unterkante des Fensters (20) mittels eines lichtdurchlässigen Klebstoffs bestimmt ist, und auf einer anderen Seite die Form einer Sammellinse besitzt, die in der Lage ist, einen Teil des im Fenster (20) umlaufenden Lichtstrahls (22) zu bündeln und zur empfindlichen Fläche der Photodiode (26) zu richten.

8. Vorrichtung nach einem der vorangehenden Ansprüche, **dadurch gekennzeichnet**, daß es sich bei dem durch die Leuchtdiode (12, 32) abgestrahlen Lichtstrahl um einen Infrarotstrahl handelt.

9. Verfahren zum Betreiben einer Erfassungsvorrichtung nach einem der vorangehenden Ansprüche , **dadurch gekennzeichnet,** daß es darin besteht:
- ein Erregungssignal (VS), etwa eine Impulsfolge (41, 42), an den Klemmen der Leuchtdiode (32) zu erzeugen;
- ein Empfangssignal (VR) in Abhängigkeit von der durch die Photodiode (32) empfangenen Lichtstärke zu erzeugen;
- das Erregungssignal (VS) mit dem Empfangssignal (VR) in einer logischen UND-Operation an diesen beiden Signalen zu vergleichen;
- das Ergebnis dieser logischen UND-Operation zu integrieren, um ein kontinuierliches Signal mit einer Kennamplitude für das Ergebnis der logischen UND-Operation zu erhalten, und:
- wenn das Ergebnis dieser logischen UND-Operation eine logische 1 ist, daraus eine Situation mit geschlossenem Fenster abzuleiten;
- wenn das Ergebnis dieser logischen UND-Operation eine logische 0 ist, eine Situation mit geöffnetem Fenster oder eingeschlagenem Fenster abzuleiten.

10. Alarmanlage für Kraftfahrzeuge , **dadurch gekennzeichnet**, daß darin mindestens eine Vorrichtung zur Erfassung der Situation Fenster geöffnet, Fenster geschlossen oder Fenster eingeschlagen nach einem der Ansprüche 1 bis 7 zum Einsatz kommt.

11. Alarmanlage nach Anspruch 10, **dadurch gekennzeichnet,** daß darin eine Vorrichtung zur Erfassung der Situation Fenster geöffnet, Fenster geschlossen oder Fenster eingeschlagen für jedes der n überwachten Fenster, die sich öffnen oder nicht öffnen lassen, zum Einsatz kommt, wobei das Erregungssignal (VS) das gleiche Signal ist, das gleichzeitig an jede der n Leuchtdioden (522, 523, 524, 525) angelegt wird, und wobei es mit den n Empfangssignalen (536, 537, 538, 539), die jeweils von den n Photodioden (562, 563, 564, 565) stammen, in einer logischen UND-Operation verglichen wird, die durch eine logische UND-Schaltung (550) mit n+1 Eingängen erfolgt.

12. Elektrisches Fensterhebersystem für Kraftfahrzeuge, **dadurch gekennzeichnet,** daß darin eine Vorrichtung zur Erfassung der Situation Fenster geöffnet, Fenster geschlossen oder Fenster eingeschlagen nach einem der Ansprüche 1 bis 8 zum Einsatz kommt.
